# EUROPEAN PATENT APPLICATION

(11) **EP 2 711 339 A1**
(43) Date of publication of application: **26.03.2014**
(21) Application number: 11865611.5
(22) Date of filing: 15.12.2011
(51) Int. Cl.: C01F 11/18, C01F 11/00

(54) **SYSTEM FOR PRODUCING PRECIPITATED CALCIUM CARBONATE FROM CALCIUM CARBONATE SLURRY WASTE; METHOD FOR CALCIUM CARBONATE SLURRY WASTE RECOVERY, PROCESSING AND PURIFICATION AND THE CALCIUM CARBONATE PRODUCT THEREOF**

(30) Priority: 14.05.2011 BR
(71) Applicant: Ecofill Especialidades em Tecnologia de Transformação de Resíduos Ltda, Rio Abaixo 12321-901 Jacareí (BR)
(72) Inventor: DA SILVA, Márcio Nunes, 08773-395 São Paulo (BR)
(74) Representative: Fernández-Pacheco, Aurelio Fernández
(86) International application number: PCT/BR2011/000475
(87) International publication number: WO 2012/155223

(57) **Abstract**

System for producing precipitated calcium carbonate from calcium carbonate slurry waste; method for calcium carbonate slurry waste recovery, processing and purification and the precipitated calcium carbonate product thereof". The application defines a system for producing precipitated CaCO3, said system having separation (ml), recovery (m2), processing (m3) and purification (m4) modules; a method for calcium carbonate slurry waste recovery, processing and purification, wherein additives (dispersants) and lime are added to the slurry, said slurry being subjected to the following steps: hydration (20-70% solids), separation using a sieve, acidulation/carbonation using CO2 from the boiler (step wherein phosphoric acid is added along with chelating acidulants such as sulfuric acid, hydrogen peroxide and citric acid), decanting, delaminating, homogenization (with dispersants being added), separation using a sieve, stabilization (pH adjusted to between 8 and 9.5) and drying (1.0% average humidity); and the precipitated calcium carbonate that has an average PSD of 3.0 µm, a minimum ISO purity of 92%, a total carbonate content of 95% and iron (Fe203) content <200 ppm. The application further describes the use of CO2 from paper-production boilers for adjusting the pH of the water used in the method, and the use of a limestone waste that is rich in organic components (obtained from the first separation step of the calcium carbonate slurry using a sieve) for correcting soil.

## Description

### FIELD OF THE INVENTION

The present invention patent with title aforementioned and object of description and claims in this cartouche is an inventive solution that has distinguished benefit in the industrial sector of providing calcium carbonate input, as well as it has particular benefit when it aims at the cellulose manufacturing industry, with a wide spectrum of application, especially in the production stage called caustification (CAO + NA2CO3+NA2S+H2O → CAC03 + NAOH + WATER) that offers as the final product soda (NaOH) associated with precipitated calcium carbonate and also residual byproduct in the form of CaCO3.

In addition, the novel process allows obtaining CaC03 from the slurry waste generated in the cellulose industry provided with economic value, which guaranties the same an industrial applicability extensive to industries of paints, ceramics, rubber, steel, plastic, paper and cellulose, among others.

### DEMAND OF THE INVENTION

Given that the cellulose manufacturing industry brings with it the generation of a byproduct in the form of precipitated CaCO3, i.e., a residual byproduct requires an emerging demand in the cellulose manufacturing industry to find a solution of handling the same, preferably a solution that adds economic value to said byproduct, in such a way that it ceases to be merely subject to discharge to the environment.

In addition there is an emerging demand from the ecological viewpoint imposing on industry responsible practices for the preservation of the environment, where to do so, especially in the case of the residual byproduct in the form of precipitate CaC03, it is a fact that it should not simply be dumped into effluent disposed adjacent the industrial plant producing cellulose.

### REQUIREMENTS OF THE INVENTION

In line with the demand of the invention the applicant idealized the unpublished "system for obtaining precipitated calcium carbonate from calcium carbonate slurry waste; process for calcium carbonate slurry waste recovery, processing and purification and the calcium carbonate product thereof" provided with the novelty associated to the inventive activity because it does not follow so obvious or clear other solutions anticipated in the prior art to use this kind of residual material, where said waste is to be recovered, processed and purified such that the resulting end product becomes a product of economic and ecological interests, adding value in the views of tactical and strategic positioning of the production industry of paper and cellulose.

In addition the "invention" is provided with industrial applicability, being economically viable, given the strictness of the patentability requirements, notably as an invention patent, as provided in the dictates of Articles 8 and 13 of Law 9279.

### ART BACKGROUND

In order to provide veracity, and consolidate the context mentioned on the topics of introductory framework, an explanation of the state of the art for obtaining cellulose product will be presented, as well as point out the resulting products, both the main product and their byproducts, notably precipitated calcium carbonate, which after critical analysis of the same, once exposed to professionals with expertise in the industry of cellulose production, and also in the processing industry of calcium carbonate, specifically of the type "precipitated", may identify their limiting aspects, thus consolidating the identification of demand needs generated by use of this byproduct generated from an industrial activity generating large volumes of product and associated waste.

The types of calcium carbonate: they can be thought two distinct types, the first being natural calcium carbonate named "gcc", and the second being precipitated calcium carbonate (CaCO3 ppt) known as "PCC".
1. Natural calcium carbonate: it has grids with average particle size from 3.0 µm, and apparent density from 1.70 g/cm3, reaching grids up to 0.5 micron.
2. Precipitated calcium carbonate: it is identified as (CaCO3 ppt), has grids with average particle size from 5 µm, and apparent density from 0.37 g/cm3. In general, the precipitated calcium carbonates have a higher purity and whiteness than the natural ones.

Other versions of the precipitated calcium carbonate (CaC03 ppt) can reach particles of an average of up to 0.4 microns of a granulometric distribution curve.

The precipitated calcium carbonate (CaC03 ppt) has characteristics similar to limestone, being alkali, that is, it is a salt with basic characteristics and has a high pH while in aqueous solution. This chemical substance is the result of the reaction of calcium oxide (quicklime) with carbon dioxide according to the following chemical equation:

Ca(OH)2 + CO2 = CaC03 + H2O

Properties of calcium carbonate: the precipitated calcium carbonate (CaC03 ppt) can be subdivided into three distinct types according to their physico-chemical properties, and may be extra light, medium and light, respectively.

Among its physicochemical properties it is relevant to note:
- excellent pigmentation property;
- excellent load component;
- atoxic;
- non-corrosive;
- nonflammable;
- odorless; and
- non-contaminating to the environment;

The sum of the properties listed above converges to a conclusive one that allows stating that the precipitated calcium carbonate (CaC03 ppt) is particularly effective as a feedstock in the industries producing paints, ceramics, rubbers, plastics, and mainly in the cellulose and paper industries.

The origin of the calcium carbonate:
a. Natural source: nowadays the calcium carbonate used is derived from mining, notably in ore deposits rich in limestone.
a.1 Process for obtaining calcium carbonate: in the limestone deposits, the calcium carbonate in the form of rock passes through a crushing procedure which reduces the size of rocks, where the amount of calcium carbonate is subjected to lime kilns thus obtaining what is technically called "quicklime - CCP", which in turn is subjected to a "carbonation" procedure, thereby converging into the precipitated calcium carbonate (CaC03 ppt) product to be used for broad spectrum of industries.
   Commercially, the precipitated calcium carbonate derived from natural sources such as mineral deposits, finds extensive product portfolio as "CARBITAL, HIDROCARB, ITAFILL, ALBACAR, MEGAFILL, ROYALE, CARBOLAG AMONG OTHERS." All of them are produced by mining and chemical industries from the process described above, ranging from one to another in their chemical and physical properties in accordance with their specific application.
a.2 Problem Identification: although the process of obtaining calcium carbonate in mining meets expectation of production of the same in an economically viable way, it occurs that it demands the need to use working force, which in turn confers high cost coupled with low productivity, thus reflecting the formation of the trading price of the product, which is high and imposes losses to the companies using calcium carbonate as feedstock.
   Another problem identified with this process of obtaining precipitated calcium carbonate lies in the fact that it is exploratory in nature, i.e., it requires the extraction activity of calcium carbonate from deposits of calcite, which leads to a predation and degradation action of the region where the deposits mentioned above are located.
b. Calcium carbonate as a byproduct of the cellulose production: cellulose industries use large amounts of caustic soda in their production process, and for this reason they generate part of the soda to be used and, thereby, manufacture their own raw material. The process of generating soda (NaOH) generates waste, primarily Ca-Co3 + water, where usually this residue is burned and turned into Cal.
b.1 The production process of cellulose: understanding the generation origin of the byproduct "calcium carbonate slurry" in the production of cellulose, which comprises the following sequential steps:
   1 cooking liquor (NaOH +Na2S);
   2 Wood in the cooking liquor solution;
   3 Black liquor (NA2CO3+NA2SO4);
   4 Immersion in boiler (NA2CO3+NA2S);
   5 Caustification, where (CAC03) is taken to the recovery kiln which generates (CO2 + CAO) as a byproduct during the calcination process, and also generates the liquid (NAOH +NA2S) in the same caustification; and
   6 Return of the circuit: where the cooking liquor returns to the beginning of the process.
b.2 Problem identification: although the residual material in the form of calcium carbonate slurry is burned, it is necessary to have a large scale burning, which brings a restrictive condition to cellulose and paper industries, because they cannot burn all the waste generated, having as a final destination the specific deposits, since they cannot be disposed in conventional deposits due to their high rate of alkalinity; therefore, they could contaminate the groundwater and the soil.

In turn, the byproduct calcium carbonate slurry hitherto has no commercial value added, and has no proper disposal procedure set, being invariably disposed directly into the environment which is now harnessed as an input to correct the soil, and is intended simply to the formation of landfills formed or not adjacent the industrial plant.

### PROPOSAL OF THE INVENTION

The applicant, aware of the economic and ecological gap in the cellulose production industry, notably for its conventional process that generates calcium carbonate slurry as a byproduct (derived specifically from step of caustification - CaO ÷ Na2C03+H2O → CaCO3 + NaOH + water) requires the development of an inventive solution in the form of a system of obtaining precipitated calcium carbonate originated from the calcium carbonate slurry waste itself generated by said cellulose industry, where the system also has defined an novel process involving the collection of said slurry which is taken to sequential procedures of recovery, processing and purification of the byproduct calcium carbonate slurry.

The inventive system is made feasible by specifying an industrial platform specific for the novel process of recovering, processing and purifying calcium carbonate slurry, which in turn can be operated remotely in a specific unit for this purpose, or locally i.e. in the cellulose industry itself, where such a decision will be taken in line with the best logistic equation specific for each case of deployment, such as geographic location, availability of transport routes, freight cost, degree of security saturation of the cellulose industrial plant, among other factors embedded in the science of industrial logistics and or transport.

Along with this novel proposal of system translated as a productive platform, the benefit which converges in solving the problems of economic and ecological order previously listed on the topic art background is established.

Objectives of the inventive system:
- obtaining a precipitated calcium carbonate (CaCO3 ppt) product of the light type coming from the byproduct calcium carbonate slurry, particularly the precipitated calcium carbonate (CACO3 ppt), differentiated in quality, reflected by the high degree of purity, as well as guarantees effective and uniform control of the average particle size and with controlled morphology for applications of the material;
- obtaining precipitated calcium carbonate (CaC03 ppt) as an economically viable byproduct from the cellulose production process, whose cost of production is lower and competitive regarding the high cost of production of precipitated calcium carbonate (CaCO3 ppt) derived from the exploitation of mineral deposits;

- obtaining precipitated calcium carbonate (CaC03 ppt) as an economically viable byproduct from the cellulose production process, with the same physical and chemical characteristics of the precipitated calcium carbonate derived from the exploitation of mineral deposits;
- as a consequence of the previous item, the invention is also aimed at enjoying a reduced need for use of working force, thanks to an expected condition of high productivity;
- obtaining the precipitated calcium carbonate (CaCO3 ppt) as an environmentally friendly byproduct of the cellulose production process;
- ensuring an alternative source for the acquisition of an input of precipitated calcium carbonate (CaC03 ppt) to the chemical companies that have this input as a component part of their products produced, highlighting the industries of paint, ceramics, rubber, plastic, steel and paper and cellulose, which are no longer totally dependent on the input precipitated calcium carbonate originating from calcite mining.
- making the cellulose production process itself less aggressive to the environment and with the calcium carbonate precipitated being able to be reused in the cellulose and/or paper industry itself as a raw material of great importance, setting up a closed cycle with green quality seal;

The environment protection is enhanced by the relevant fact that this process features a closed cycle system, and therefore does not allow the emission, release of toxic elements in the environment, where both the water removed by drainage and gas from the drying oven, set in the novel process steps are returned and confined in the cycle.

Predominant distinguishing characteristic: in order to make the list of goals listed in the proposed invention feasible, the novel system of obtaining precipitated calcium carbonate originating from calcium carbonate slurry waste was conceived, distinguished by being a closed system where there is the capturing of slurry calcium carbonate byproduct generated in the step of caustification (CAO + NA2CO3+H2O → CACO3 + NAOH + water) provided in the cellulose production, which goes through the following modules:
1. Module of classifying the slurry captured;
2. Module of recovering the slurry captured;
3. Module of processing the slurry captured; and
4. Module of purifying the slurry captured.

The inventive system ensures that the untreated calcium carbonate slurry, while passing through the operation and process modules, converges into precipitated calcium carbonate with added commercial value.

In turn, each of these modules is operating with pre-defined, specific steps, each with equalized procedures, making the process of obtaining precipitated calcium carbonate highly productive and with final quality assured.

### DESCRIPTION OF THE DRAWINGS

A complementary to the present description of the specification, in order to obtain a better understanding of the characteristics of the present invention patent, is accompanying the same, with a set of drawings attached, where A complementary to the present description, in order to obtain a better understanding of the operation characteristics of the process accompanying the same, with a set of drawings attached, where so as exemplified, but not limited to, is represented a preferred embodiment for the invention, where:
Figure 1 is a representation in the form of a block diagram of the process of obtaining cellulose, demonstrating the production of waste material in the form of slurry with a high concentration of calcium carbonate, thus indicating the source of the novel process of recoverying, processing and purifying the slurry waste with high content of calcium carbonate which anchors the inventive system;
Figure 2 is a representation in the form of a block diagram of the system for obtaining precipitated calcium carbonate originating from residual calcium carbonate slurry, showing its main modules;
Figure 3 is an illustrative representation of an operating platform, showing the industrial structure embedded and minimally needed to consolidate the system of obtaining precipitated calcium carbonate originating from calcium carbonate slurry waste; and

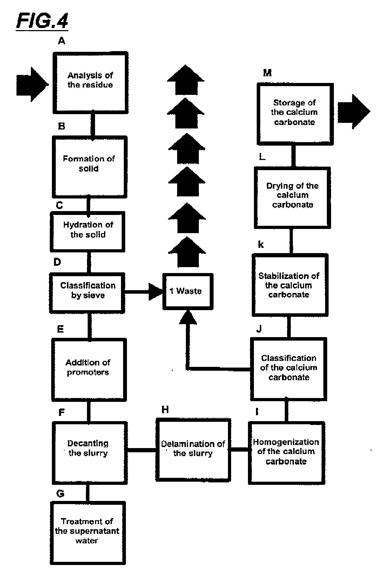

Figure 4 is a representation in the form of a flow chart of the procedure of obtaining recovery, processing and purification of the slurry waste with a high content of calcium carbonate which guides the operation of the operating platform.

### DETAILED DESCRIPTION

The following detailed description should be read and interpreted with reference to the block diagrams, process flowcharts and operating platform disclosed, and is not intended to limit the scope of the invention which is limited only to what is explained in the set of claims.

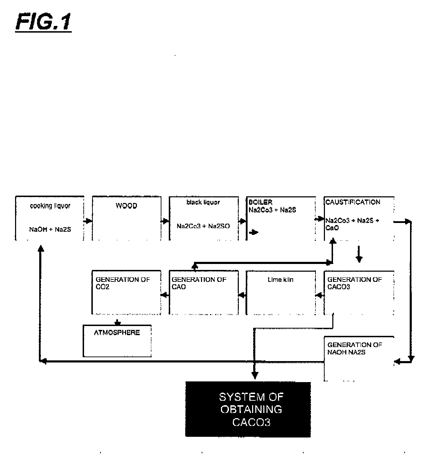

The cellulose production process: as shown in the flowchart of Figure 1, and in order to support the understanding of the present invention demand, the applicant invites the reader to enjoy in a general and brief way the technical flow for obtaining cellulose, where he can identify the generation of a waste product in the form of slurry with high content of calcium carbonate, justifying the demand of the invention in the form of a continuous and closed process of recovery, processing and purification of the slurry waste with a high content of calcium carbonate.

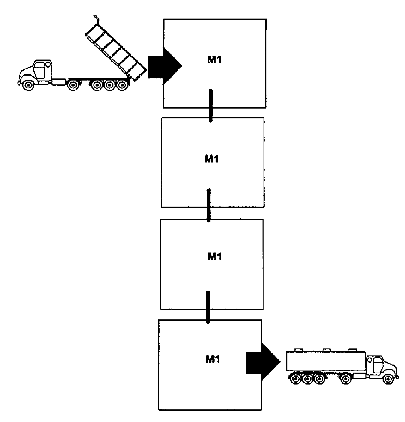

System to obtain the precipitated calcium carbonate: as evidenced by Figure 2, said system is formed by interconnected modules in sequence:
- Module of classifying the slurry captured (ml);
- Module of recovering the slurry captured (m2);
- Module of processing the scurry captured (m3); and
- Module of purifying the slurry captured (m4).

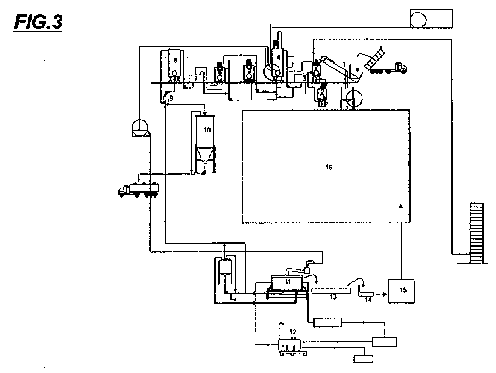

Platform to obtain the precipitated calcium carbonate: as evidenced by Figure 3, said platform in an embodiment is formed by:
- A recovery station of CaCO3 slurry, especially formed by a conveyor belt (1) where a first preliminary classification of the slurry received with impurities is performed;
- Mixing tanks (2) where the pre-classified slurry mud is mixed with chemical additives;
- Vibrating sieves (3) and (7);
- Passage tank (4) and (8);
- Mills (5) and (6);
- Magnetic filter (9);
- Storage silo (10);
- Dryer (11);
- Boiler (12);
- Condenser (13);
- Sacker (14);
- packaging (15); and
- Warehouse (16).

The novel process of recovery, processing of the slurry waste with high content of calcium carbonate: consists of the following steps:
- Analysis of the residue (a): the calcium carbonate slurry (CaC03) is received by the transport platform (1) where the following properties are measured: alkalinity, moisture content and mesh retention;
- Formation of solid (b): the calcium carbonate slurry (CaCO3) pre-classified is transported to primary mixing tanks (2) where it receives chemical additives (called promoters, among them a "dispersant" in the range of 0.01% to 4.5% per ton of calcium carbonate - dry basis), and about 20% of quicklime is also added;
- Hydration of the solid (c): the solid calcium carbonate obtained is hydrated until the range of 20 to 70% of solids;
- Classification by sieve (d): the solidified and hydrated calcium carbonate slurry is brought to the vibrating sieve (3) which allows the passage of CaC03 in a previously specified granulation, retaining certain amount of waste material with granulation over the sieve (3) where this "lime waste" is the byproduct of the inventive process, being rich in organic compounds and very useful for fertilizing the soil, being collected, sacked and having commercial destination to correct the soil.
- Addition of promoters (e): the solidified, hydrated and sieved calcium carbonate slurry is pumped to a passage tank (4) which there will be a mixture of materials with the addition of phosphoric acid or other acidulant chelating agents, such as sulfuric acid, hydrogen peroxide, citric acid which act in the treatment system by increasing the amount of promoters and dispersants in 0.15%, and the mixture is carbonated with the CO2 coming from the boiler (12) ;
- Decanting the slurry (f) : where the hydrated and sieved calcium carbonate slurry and with an amount of promoters and dispersant is left to rest, thus forming a level of supernatant water, which is characterized in that it is clean water thanks to the action of adding quicklime (around 20%) to the primary mixer (2), thus generating a volume of decanted calcium carbonate slurry and also a considerable volume of supernatant water;
- Treatment of the supernatant water (g): the supernatant water is removed from the interior of the passage tank (4) to an external reservoir by an inter-communicating drain in such a way that, once inside it, said water is treated for pH adjustment and subsequent return to the system, helping to reduce the consumption of water;
- Delamination of the decanted slurry (h): the decanted slurry is pumped to a centrifuge, particularly mills (5) and (6), which are low speed mills in which the flow is controlled, in such a way that the slurry particles suffer delamination, i.e., they are separated, and the dispersant increases in 0.1% and the peripheral speed is also increased by 5%, thereby generating the delaminated calcium carbonate slurry;

The delaminated calcium carbonate slurry has lighter particles, which gives a better performance in its use as end product.

The position of the mills (5) and (6), respectively, can then be modified to beyond the system, depending on the product to be produced. For example, this system provides a material for commercial application known as "Ecofill pl, tt, s".
- Homogenization of the delaminated CaC03 (i): the delaminated calcium carbonate slurry is routed by pumping for an intermediate reservoir or pressure tank (8) from where it is pumped into a second mixing equipment (2) in such a way that 0.1% of dispersant is added with reduced input flow and peripheral speed increased in 5%, thus generating the crude homogenate calcium carbonate product;
- Classification of the calcium carbonate (j): once mixed, the crude homogenate calcium carbonate product is transported and discharged on a second vibrating sieve (7), where the volume passing through the sieve is called slurry in process.
   In turn, the residual amount retained on the sieve (7) is called "lime waste", representing approximately 3% on average of the total volume of crude homogenate calcium carbonate product; and this lime waste is removed again from the vibrating sieve (7) and stored in a specific location for subsequent preparation as an input in a form to correct the soil for agriculture;
- Stabilization of the calcium carbonate (k): after the classification step, the resulting "slurry in process" is taken into a tank passage (2) to which is also added the amount of 0.1% phosphoric acid, in which the pH of the slurry in process in the tank must be stabilized between 8 and 9.5 and even with 55% of solids, thus generating a volume of stabilized slurry in the process;
- Drying the stabilized slurry in process (I): the volume of stabilized slurry in process is pumped into a rotary dryer (11) heated by a boiler (12), which generates heat energy by circulating and heating steam in its internal system. This heat is conveyed by heat exchange between the walls of rotary dryer (11) in such a way that it acts directly on the volume of stabilized slurry in process, thus resulting in an amount of dried and stabilized CaC03 slurry in process with 1.0% of mean moisture, which is technically called precipitated calcium carbonate of high purity, whiteness and high coverage.

The gas generated by the boiler (12) by burning the oil is sent via a blower device to the passage tank provided in the step of decanting the slurry (f) in order to always maintain the optimal pH of the product in order not to use chemicals and not emanate the same gas in the air.

Basically, it is in the system and method innovated and claimed that the purification, the control of particle size and the bleaching of particles, and also the morphological control are made, resulting in the precipitation of CaCO3, thus obtaining a valuable product of economic interest.

The resulting product: the precipitated calcium carbonate (CaCO3) brings with it a defined morphological structure and with distribution of controlled particle size, giving the visual feature provided of great smoothness, high brightness, high opacity and bulk, thus ensuring potential use by papermaker industries, in filter and size press which, in order to make the understanding of the physical and chemical properties of the product more believable, table 1 is presented.

**Table 1. Technical specifications of precipitated calcium carbonate**

| Physical properties (typical values) | Chemical composition (typical values) |
|---|---|
| PSD (average) 3.0 microns | Carbonate (Total) 95% |
| ISO Brightness (minimum) 92% | Iron (Fe2O3) <200 ppm |
| H2O absorption 7.5 m | |
| Moisture content (max) 1.0% | |
| Viscosity (Brookfield) 600 to 1000 cps | |

The choice of the preferred embodiment of the invention object of claim in the present cartouche, which is described in details in this topic, is provided only by way of example. Alterations, modifications and variations can be made in any other embodiments of the continuous and closed process of recovery, processing and purification of calcium carbonate slurry waste by those with skill in the art, without however departing from the purpose disclosed in the present patent, which is defined solely by the appended claims.

It appears by what has been described and illustrated that the "CONTINUOUS AND CLOSED PROCESS OF RECOVERY, PROCESSING AND PURIFICATION OF CALCIUM CARBONATE SLURRY WASTE IN THE PRODUCTION OF CELLULOSE AND THE CALCIUM CARBONATE PRODUCT THEREOF" claimed here fits the standards governing the invention patent in light of the Industrial Property Law, deserving by the foregoing and as a consequence the respective privilege.

## Claims

1. A system of obtaining precipitated calcium carbonate originating from calcium carbonate slurry waste **characterized in that** it is formed by the following modules:
- Module of classifying the slurry captured (ml);
- Module of recovering the slurry captured (m2);
- Module of processing the slurry captured (m3); and
- Module of purifying the slurry captured (m4).

2. A process of recovering, processing and purifying the calcium carbonate slurry waste **characterized in that** it comprises the steps of:
- Analysis of the waste (a): the calcium carbonate slurry (CaCO3) is received by the transport platform (1) where the following properties are measured: alkalinity, moisture content and mesh retention;
- Formation of solid (b): the calcium carbonate slurry (CaCO3) pre-classified is transported to primary mixing tanks (2) where it receives chemical additives (called promoters, among them a "dispersant" in the range of 0.01% to 4.5% per ton of calcium carbonate - dry basis), and about 20% of quicklime is also added;
- Hydration of the solid (c): the solid calcium carbonate obtained is hydrated until the range of 20 to 70% of solids;
- Classification by sieve (d): the solidified and hydrated calcium carbonate slurry is brought to the vibrating sieve (3) which allows the passage of CaC03 in a previously specified granulation, retaining certain amount of waste material with granulation over the sieve (3) where this "lime waste" is the byproduct of the inventive process, being rich in organic compounds and very useful for fertilizing the soil, being collected, sacked and having commercial destination to correct the soil.
- Addition of promoters (e): the solidified, hydrated and sieved calcium carbonate slurry is pumped to a passage tank (4) which there will be a mixture of materials with the addition of phosphoric acid or other acidulant chelating agents, such as sulfuric acid, hydrogen peroxide, citric acid which act in the treatment system by increasing the amount of promoters and dispersants in 0.15%, and the mixture is carbonated with the CO2 coming from the boiler (12) ;
- Decanting the slurry (f): where the hydrated and sieved calcium carbonate slurry and with an amount of promoters and dispersant is left to rest, thus forming a level of supernatant water, which is **characterized in that** it is clean water thanks to the action of adding quicklime (around 20%) to the primary mixer (2), thus generating a volume of decanted calcium carbonate slurry and also a considerable volume of supernatant water;
- Treatment of the supernatant water (g): the supernatant water is removed from the passage tank (4) to an external reservoir by an inter-communicating drain in such a way that, once inside it, said water is treated for pH adjustment and subsequent return to the system, helping to reduce the consumption of water;
- Delamination of the decanted slurry (h): the decanted slurry is pumped to a centrifuge, particularly mills (5) and (6), which are low speed mills in which the flow is controlled, in such a way that the slurry particles suffer delamination, i.e., they are separated, and the dispersant increases in 0.1% and the peripheral speed is also increased by 5%, thereby generating the delaminated calcium carbonate slurry, where the position of the mills (5) and (6), respectively, can then be modified to beyond the system, depending on the product to be produced;
- Homogenization of the delaminated CaCO3 (i): the delaminated calcium carbonate slurry is routed by pumping for an intermediate reservoir or pressure tank (8) from where it is pumped into a second mixing equipment (2) in such a way that 0.1% of dispersant is added with reduced input flow and peripheral speed increased in 5%, thus generating the crude homogenate calcium carbonate product;
- Classification of the calcium carbonate (j): once mixed, the crude homogenate calcium carbonate product is transported and discharged on a second vibrating sieve (7), where the volume passing through the sieve is called slurry in process.
In turn, the residual amount retained on the sieve (7) is called "lime waste", representing approximately 3% on average of the total volume of crude homogenate calcium carbonate product; and this lime waste is removed again from the vibrating sieve (7) and stored in a specific location for subsequent preparation as an input in a form to correct the soil for agriculture;
- Stabilization of the calcium carbonate (k): after the classification step, the resulting "slurry in process" is taken into a tank passage (2) to which is also added the amount of 0.1% phosphoric acid, in which the pH of the slurry in process in the tank must be stabilized between 8 and 9.5 and even with 55% of solids, thus generating a volume of stabilized slurry in the process;
- Drying the stabilized slurry in process (I): the volume of stabilized slurry in process is pumped into a rotary dryer (11) heated by a boiler (12), which generates heat energy by circulating and heating steam in its internal system. This heat is conveyed by heat exchange between the walls of rotary dryer (11) in such a way that it acts directly on the volume of stabilized slurry in process, thus resulting in an amount of dried and stabilized CaCO3 slurry in process with 1.0% of mean moisture;

3. The process of recovering, processing and purifying the calcium carbonate slurry waste, according to claim 2, wherein in the step of delamination of the decanted slurry (h) the delaminated calcium carbonate slurry is **characterized in that** it has lighter particles, which gives a better performance in its use as end product. It should be noted that the position of the centrifuge can be modified to beyond the system, depending on the product to be produced. For example, this system provides a material for commercial application known as "Ecofill pl, tt, s";

4. The process of recovering, processing and purifying the calcium carbonate slurry waste, according to claim 2, wherein in step of drying the stabilized slurry in process (I) the gas generated by the boiler by burning the oil is **characterized in that** it is sent via a blower device to the passage tank defined in the step of treatment of the supernatant water (g) and keeping the optimal pH;

5. A precipitated calcium carbonate product **characterized in that** it presents a defined morphological structure and with distribution of controlled particle size, and visual feature with great smoothness, high brightness, high opacity and bulk;

6. A precipitated calcium carbonate product, according to claim 4, wherein the precipitated calcium carbonate has physical properties **characterized by** PSD (average) of 3.0 microns, ISO Brightness (minimum) of 92% of H2O absorption of 7.5 m; Moisture content (max) of 1.0%; Viscosity (Brookfield) in the range of 600 to 1000 cps; and

7. A precipitated calcium carbonate product, according to claim 4, wherein the precipitated calcium carbonate has chemical properties **characterized in that** it has 95% of carbonate (total) and iron in the form of Fe203 <200 ppm.
